# EUROPÄISCHE PATENTSCHRIFT

(11) **EP 2 869 050 B1**
(45) Veröffentlichungstag und Bekanntmachung des Hinweises auf die Patenterteilung: **01.02.2017**
(21) Anmeldenummer: 13190917.8
(22) Anmeldetag: 30.10.2013
(51) Int. Cl.: G01M 3/16, E04D 13/00

(54) **Detektionsvorrichtung für Flachdächer**
Detection device for flat roofs
Dispositif de détection pour toits plats

(43) Veröffentlichungstag der Anmeldung: 06.05.2015
(73) Patentinhaber: Fleischmann & Petschnig Dachdeckungs-Gesellschaft m.b.H., 9020 Klagenfurt (AT)
(72) Erfinder: Petschnig, Otmar, 9023 Klagenfurt (AT); Eusch, Ingram, 9500 Villach (AT); Scheiflinger, Horst, 9722 Gummern (AT); Gasser, Bernhard, 9554 St. Urban (AT)
(74) Vertreter: Becker, Thomas

(56) Entgegenhaltungen:
- EP-A1- 2 236 691
- DE-A1- 3 636 074
- DE-C2- 3 600 374
- US-A- 4 598 273

## Beschreibung

Die Erfindung betrifft eine Detektionsvorrichtung zur Prüfung von Flachdächern an/von Gebäuden.

Ein Flachdach ist typischerweise wie folgt aufgebaut (von oben nach unten):
- Obere Dachhaut (zum Beispiel aus Blech, Bitumen, Schiefer, Kunststoff)
- Wärmedämmung (zum Beispiel aus Mineralwolle oder Kunststoff)
- Dampfsperre (zum Beispiel auf Bitumenbasis)

Soweit nachstehend nichts anders angegeben ist wird von diesem grundsätzlichen Aufbau ausgegangen, ohne die Erfindung jedoch auf die Anwendung für ein so gestaltetes Flachdach zu beschränken.

Die Dampfsperre des Flachdachs liegt auf der Gebäudedecke (zum Beispiel aus Beton) auf.

Obwohl Flachdächer dieser Art seit Jahrzehnten im privaten und gewerblichen Bereich eingesetzt und laufend verbessert werden bleibt ein grundsätzliches Problem: Das Flachdach muss oft Temperaturen von ≥ 50°C ebenso aushalten wie Temperaturen von ≤ minus 20°C. Es muss Windlasten, Schneelasten, Regenlasten ebenso widerstehen wie mechanischen Beanspruchungen durch Dachaufbauten und Fremdteile, die auf das Flachdach fallen.

Insbesondere thermische und/oder mechanische Spannungen im Flachdach führen oft zu Undichtigkeiten/Rissen im Dach. In der Folge dringen Wasser und Fremdkörper in das Flachdach ein. Eindringendes Wasser verteilt sich und ist extrem schwer zu detektieren, oft erst nach längeren Zeitintervallen, wenn das Dach schon weitgehend beschädigt ist.

In der EP 2236691A1 werden ein Verfahren und eine Anordnung zum gleichzeitigen Detektieren von flüssigem Wasser (in unmittelbarer Nähe der Dampfsperre) und von Wasserdampf (im Bereich der Wärmedämmung) vorgeschlagen. Die dazu verwendeten Sensoren bestehen aus Drähten, die unmittelbar auf der Dampfsperre beziehungsweise in der Wärmedämmung verlegt werden, was kompliziert und unsicher ist.

Die DE 3600374 C2 schlägt eine Vorrichtung zur Detektion von Wasserschäden durch Kondensatbildung und Leckagen an Flachdächern vor. Dabei werden auf dem Flachdach Wasser-/Feuchtigkeitssensoren stationär montiert und zwar in zugehörigen Messgehäusen. Auch das ist aufwändig.

Die US 4,598,273 zeigt eine quaderförmige Baueinheit mit einem Messsystem zwischen einer Isolationsschicht und einer Bitumenschicht. Sie arbeitet vergleichsweise ungenau und ist schwer in einem Dach zu montieren.

Der Erfindung liegt die Aufgabe zugrunde, eine solche Detektionsvorrichtung in Hinblick auf möglichst viele der folgenden Eigenschaften zu optimieren: Montage, Art der Messwert-/Parameter-Erfassung, Aussagekraft der ermittelten Parameter, Auswertung, Anzeige der detektierten Parameter, Zuverlässigkeit.

Der Erfindung liegt folgende Erkenntnis zugrunde:
Das aus dem Stand der Technik bekannte Prinzip, eine Detektionsvorrichtung in ein Flachdach einzusetzen, wird beibehalten, um die Detektion in-situ ausführen zu können.

Allerdings unterscheiden sich der Aufbau der Detektionsvorrichtung und die Anordnung der Vorrichtung im Dach charakteristisch vom Stand der Technik. Dabei stehen zwei Merkmale Im Vordergrund:
- Ein zugehöriger Detektionskopf/Messkopf ist nicht unmittelbar im Dach verlegt, sondern in einem separaten Raum im Gehäuse der Detektionsvorrichtung angeordnet.

Der Raum umgibt den Messkopf und schafft konstante Messbedingungen für den Messkopf (die Messeinheit, den Messfühler) auch über einen längeren Zeitraum.

Es werden keine Zufallsergebnisse detektiert, sondern systematisch objektive Daten erfasst, die in dem korrespondierenden Raum beziehungsweise in dessen unmittelbarer Umgebung herrschen.

Der Raum ist durch weitgehend konstante Verhältnisse gekennzeichnet; er kann mit einem luft- und/oder feuchtigkeits-durchlässigen Material homogen gefüllt sein, ist normalerweise aber leer, das heißt - bis auf den Detektionskopf selbst und etwaige Konstruktionselemente - ein Hohlraum.

Über den Raum wird ein Abstand/Freiraum zwischen Detektionskopf und Umgebung (des Flachdachs) geschaffen, also insbesondere ein Abstand in axialer Richtung (vertikal nach unten) zur Dampfsperre, in radialer Richtung (horizontal nach außen) zur Wärmedämmung und/oder zur Dachhaut (vertikal nach oben).
- Der Detektionskopf (die Messeinrichtung) ist im Gehäuse beziehungsweise in dem genannten Raum so angeordnet, dass in der Funktionsposition ein Abstand zum Boden des Flachdachs (der Dampfsperre) besteht.

Diese Anordnung ermöglicht es, zuverlässige Werte zu detektieren, und zwar auch als Funktion der Zeit.

Hat sich nur wenig Wasser auf der Dampfsperre des Flachdachs angesammelt wird dies nicht vom Detektionskopf erfasst, weil der Detektionskopf im Abstand zu dem Bereich angeordnet ist, in dem das Wasser steht. Beispielsweise bei nur kurzfristiger Kondensatbildung wird dies nicht detektiert und damit ein Fehlalarm verhindert. Erst wenn sich so viel Wasser angesammelt hat, dass der Detektionskopf erreicht wird, wird dies angezeigt. Bei unverändertem Wasserstand oder bei weiterem Eindringen von Wasser bleibt das entsprechende Signal erhalten. Verdunstet das Wasser jedoch oder reduziert sich die Wassermenge aus anderen Gründen erlischt das Signal wieder. Zeitlich begrenzte Effekte können so erkannt werden.

Durch die Anordnung von Detektionsköpfen in unterschiedlicher vertikaler Höhe, also in unterschiedlichem Abstand zum unteren freien Ende des Grundkörpers beziehungsweise in unterschiedlichem Abstand zum Boden des Flachdachs können die Abstufungen zwischen den entsprechenden ja/nein Anzeigen anwendungsspezifisch eingestellt werden.

In ihrer allgemeinsten Ausführungsform betrifft die Erfindung eine Detektionsvorrichtung zur Prüfung von Flachdächern von Gebäuden, mit den Merkmalen des Anspruchs 1.

Der Abstand kann auf unterschiedliche Weise eingestellt werden. Dabei wird der Detektionskopf so im Grundkörper aufgehängt oder befestigt, dass er im Abstand zum Boden des Flachdachs verläuft, wenn die Detektionsvorrichtung im Flachdach eingebaut ist.

Der Raum wird an seinem unteren Ende, in der Funktionsposition der Detektionsvorrichtung, mit einer Bodenplatte begrenzt, deren Dicke den Abstand definiert, wenn die Vorrichtung auf der Dampfsperre aufliegt und der Detektionskopf (die Messeinheit) auf der Bodenplatte liegt.

Die Messeinheit wird auf oder in der Bodenplatte angeordnet, zum Beispiel in Nuten oder anderen Vertiefungen auf der Oberseite der Bodenplatte (in der Funktionsposition).

Die Bodenplatte ist zumindest abschnittweise flüssigkeitsdurchlässig und weist dazu entsprechende Öffnungen auf, vorzugsweise in einer Größe, Anordnung und Zahl, um Feuchtigkeit bestimmter Menge zum Detektionskopf ansaugen zu können.

Die Bodenplatte kann in der Funktionsposition horizontal ausgerichtet sein oder zur Horizontalen geneigt ausgerichtet sein. In beiden Fällen können mehrere Messköpfe in unterschiedlicher Höhe angeordnet werden, um unterschiedliche Feuchtigkeitsmengen detektieren zu können.

Die Detektionsvorrichtung kann vollständig im Dach eingebaut werden. Bei einem neuen Dach ist das selbstverständlich, bei einer Nachrüstung wird das Dach geöffnet, die Vorrichtung eingesetzt und das Dach anschließend wieder geschlossen/versiegelt. Bei Detektionsköpfen, die drahtlos arbeiten, sind keine weiteren Maßnahmen notwendig, ansonsten werden Kabel durch die Dachhaut geführt.

Ebenso kann die Vorrichtung auch teilweise das Flachdach (die Dachhaut) überragen. Die erfindungsgemäße Vorrichtung hat dann zwei Abschnitte, nämlich einen ersten unteren Abschnitt, der in einer Funktionsposition (also nach dem Einbau) der Detektionsvorrichtung im Flachdach angeordnet ist und einen zweiten oberen Abschnitt, der nach dem Einbau das Flachdach nach oben überragt.

Dabei ist die axiale Länge zwischen den freien Enden des ersten und zweiten Abschnitts größer als die Dicke des zu prüfenden Flachdachs, damit die Vorrichtung sich über die gesamte Höhe des Flachdachs und darüber hinaus erstrecken kann, also insbesondere von der unteren Dampfsperre bis über die obere Dachhaut hinaus.

Das ist wichtig, damit alle Bereiche innerhalb des Flachdachs messtechnisch erreicht werden können.

Diese Vorrichtung umfasst mindestens einen Detektionskopf am ersten Abschnitt des Grundkörpers. Vor allem ist vorgesehen, dass mindestens ein Detektionskopf in einem Raum am freien (unteren) Ende des ersten Abschnitts des Grundkörpers ausgebildet ist.

Wenn die Vorrichtung nur einen Detektionskopf hat ist dieser Messkopf also in dem genannten Raum am freien unteren Ende des ersten Abschnitts angeordnet. Ansonsten gibt es mindestens einen weiteren Detektionskopf an irgendeiner Stelle im oder am ersten Abschnitt des Grundkörpers.

Der Begriff Detektionskopf umfasst alle Arten von Detektionseinrichtungen, um die genannten Parameter erfassen und weiterleiten und/oder auswerten zu können. Form und Größe sind prinzipiell unkritisch, solange an der gewünschten Stelle zuverlässig gemessen werden kann.

Generell gilt: Um die gewünschten konstanten Umgebungsbedingungen für den Detektionskopf zu erreichen werden folgende Optimierungen alternativ oder kumulativ vorgeschlagen:
- der Raum ist so gestaltet, dass er in radialer beziehungsweise axialer Richtung des Grundkörpers (also typischerweise: vertikal oder horizontal) zumindest partiell für Feuchtigkeit, Gas und/oder Licht durchlässig ist.

Der Grundkörper ist an seinem unteren freien Ende von einer Lochplatte begrenzt. Die Löcher in der Platte, die in der Funktionsposition der Vorrichtung im Wesentlichen horizontal verläuft und auf der Dampfsperre des Flachdachs aufliegen kann, sind so dimensioniert, dass Flüssigkeit, die die Platte erreicht, welche beispielsweise zwischen Lochplatte und Dampfsperre gelangt, in den Raum über der Lochplatte gesaugt wird. Im Bereich der Löcher und/oder auf der Lochplatte kann mindestens einer der genannten Detektionsköpfe angeordnet werden, um die Anwesenheit von Flüssigkeit erfassen und anschließend anzeigen zu können.

Mit Abstand oberhalb der Lochplatte ist eine korrespondierende Platte/Wand angeordnet, um den Messraum nach oben zu begrenzen. In dieser oberen Platte können Öffnungen für Kabel sein, falls der Detektionskopf verkabelt ist, um die Kabel in den oberen Teil des Grundkörpers und damit aus dem Flachdach heraus zu führen.

Der oder die Detektionsköpfe sind in dem Raum zwischen den beiden Platten angeordnet. Die Platten können durch Abstandhalter verbunden sein.

Durch den zylinderförmigen Grundkörper (Gehäuse) für die Detektionsvorrichtung ergibt sich ein zylinderförmiger Raum zur Aufnahme mindestens einer Detektionseinrichtung, wobei dieser Raum - nach Einbau der Detektionsvorrichtung im Flachdach - der Dampfbremse des Flachdachs benachbart ist.

Nach einer Ausführungsform ist mindestens ein Detektionskopf mit radialem Abstand zur äußeren Umfangsfläche des Grundkörpers angeordnet ist. Auch dies dient dazu, objektive Messergebnisse zu erhalten.

Die Zylinderform hat den Vorteil, dass ein zugehöriges zylinderförmiges Loch leicht und sehr präzise in ein bestehendes Flachdach gebohrt werden kann. Nach dem Einsetzen der Detektionsvorrichtung in das Loch lassen sich beide leicht gegeneinander abdichten, was wichtig ist.

Wenn die Detektionsvorrichtung eine Länge aufweist, die kleiner als die Dicke des Flachdachs ist, kann der Bereich des Lochs oberhalb der Detektionsvorrichtung mit dem gleichen Material (zum Beispiel Mineralwolle) verfüllt werden, das beim Öffnen des Dachs entnommen wurde. Dadurch werden Kältebrücken vermieden.

Grundsätzlich gilt: Für die Detektionsvorrichtung sollen Materialien mit gleichen oder ähnlichen physikalischen Eigenschaften verwendet werden, die die Umgebungsmaterialien des Flachdachs aufweisen.

Ein (Hohl)Raum zur Aufnahme einer Detektionseinheit kann nicht nur am unteren freien Ende des Grundkörpers vorgesehen werden, sondern auch an anderen Stellen, zum Beispiel im ersten, unteren Abschnitt des Grundkörpers, gegebenenfalls sogar im oberen zweiten Abschnitt, wenn entsprechende Verbindungswege zum Flachdach innerhalb des Grundkörpers vorgesehen werden, zum Beispiel Kanäle, entlang der Feuchtigkeit und/oder Gas strömen kann.

Zur Detektierung von Kondensat und/oder Gasen kann eine Messkopfanordnung günstig sein, die nach dem Einbau der Vorrichtung direkt unterhalb der Dachhaut verläuft.

Mindestens ein Detektionskopf kann kabellos (zum Beispielüber bluetooth, wifi oder ähnliche Systeme) mit einer Erfassungs- und/oder Auswerteeinheit verbindbar sein. Dies ermöglicht es, ein permanente Kontrolle über den Dachzustand durchzuführen. Die Ergebnisse können an beliebiger Stelle angezeigt und/oder ausgewertet werden. Bei Überschreiten bestimmter Grenzwerte können Signale ausgelöst werden, beispielsweise wird eine Textnachricht telefonisch an eine Kontrollstelle übermittelt.

Es ist selbstverständlich, dass die Aussagekraft jeder einzelnen Detektionsvorrichtung umso größer ist, je mehr solcher Vorrichtungen über die Dachfläche verteilt angeordnet werden, so dass an mehreren Stellen Messwerte verfasst, verglichen, ausgewertet und/oder gemeldet werden können.

Wie bereits ausgeführt kann mindestens ein Detektionskopf über Kabel mit einer Erfassungs- und/oder Auswerteeinheit verbind bar sein. Diese kann in der Vorrichtung selbst (im oberen Abschnitt) oder getrennt davon aufgestellt werden.

Besondere Vorteile bietet ein Detektionskopf aus der Gruppe: elektrischer Sensor, elektronischer Sensor, RFID Chip, mit dem Daten elektronisch und vorzugsweise drahtlos erfasst und weitergeleitet werden.

So kann beispielsweise eine Veränderung der elektrischen Leitfähigkeit innerhalb der Materialien des Flachdachs ebenso angezeigt werden wie eine Veränderung der Luftfeuchtigkeit, die Entstehung von Faulgasen oder dergleichen.

Anhand der übermittelten Informationen und deren zeitlicher Folge lässt sich ein Schaden an einem Flachdach nicht nur schnell und zuverlässig feststellen, sondern auch lokal gut orten.

Die Erfindung ermöglicht es, im Grundkörper auch einen Detektionskopf zur optischen Analyse des Flachdachs anzuordnen, um zum Beispiel über ein lichtleitendes (optisches) Kabel eine lokale Inspektion durchzuführen, ähnlich einem Endoskop.

Ebenso ist es möglich, mindestens einen Detektionskopf zur Entnahme von Proben aus dem Flachdach vorzusehen.

Die Abdichtung zwischen dem Grundkörper und der korrespondierenden Öffnung im Flachdach kann auf konventionelle Weise erfolgen, beispielsweise mit mindestens einem, radial zur äußeren Umfangsfläche des Grundkörpers nach außen verlaufenden Abdichtungselement (einem Flansch ähnlich), das dann auf dem Flachdach (der Dachhaut) verklebt oder verschweißt wird.

Als Materialien für die Vorrichtung eignen sich alle Materialien, die sich in Bezug auf die gewünschten Messverfahren/Detektierverfahren neutral verhalten, also diese nicht unkontrolliert verfälschen.

Mehrere Vorrichtungen können vernetzt werden.

Die Erfindung wird nachstehend anhand eines Ausführungsbeispiels näher beschrieben. Dabei zeigen, jeweils in stark schematisierter Darstellung:
Figur 1: eine dreidimensionale Ansicht einer erfindungsgemäßen Vorrichtung, wobei das Gehäuse "durchsichtig" ist, um den inneren Aufbau erkennen zu können,
Figur 2: einen Schnitt durch ein Flachdach mit einer darin installierten Vorrichtung gemäß Figur 1.
Figur 3: einen Schnitt gemäß Figur 2 für eine zweite Ausführungsform der Erfindung.
Figur 4: eine dreidimensionale Ansicht einer Bodenplatte, die einen Raum für einen Detektionskopf begrenzt.

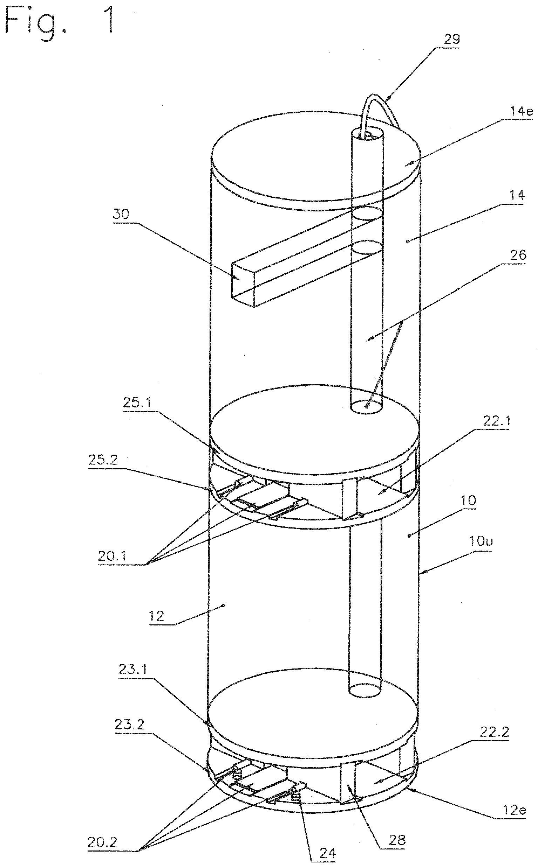

Die Detektionsvorrichtung gemäß Figur 1 hat einen zylindrischen Grundkörper 10 und entsprechend eine zylindrische äußere Umfangsfläche 10u. Der Grundkörper 10 ist im Wesentlichen hohl und nimmt verschiedene Detektionsköpfe sowie deren Anschlusselemente auf, wie nachstehend beschrieben wird.

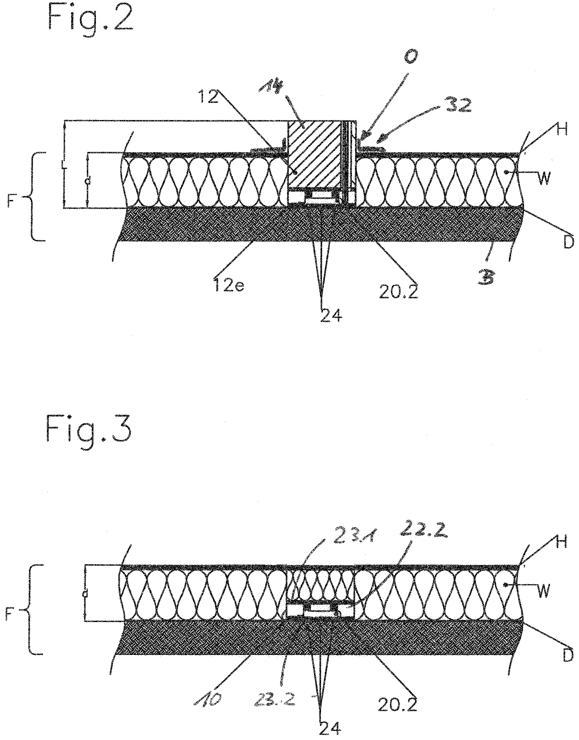

Der Grundkörper 10 weist folgende Merkmale auf:
- einen ersten unteren Abschnitt (12) auf, der in einer Funktionsposition der Detektionsvorrichtung (Figur 2) im Flachdach (F) angeordnet ist,
- einen zweiten oberen Abschnitt (14), der in dieser Funktionsposition das Flachdach (F) nach oben überragt
- dabei ist die axiale Länge (L) zwischen den freien Enden (12e, 14e) des ersten und zweiten Abschnitts (12, 14) größer ist als die Dicke/Höhe (d) des zu prüfenden Flachdachs (F),
- etwa in der (axialen) Mitte des ersten Abschnitts 12 des Grundkörpers 10 ist ein Detektionskopf 20.1 zur Messung von Luftfeuchtigkeit vorgesehen,
- am unteren Teil des Abschnitts 12 ist in ein Detektionskopf 20.2 zur Detektion von Wasser vorgesehen,
- beide Detektionsköpfe 20.1 und 20.2 sind innerhalb eines korrespondierenden Raums 22.1, 22.2 angeordnet, so dass um den jeweiligen Messkopf 20.1, 20.2 herum jeweils ein Hohlraum innerhalb des Gehäuses 10 ausgebildet ist.

Der Raum 22.2. am unteren Teil des Abschnitts 12 ist zwischen zwei Platten 23.1,23.2 ausgebildet, die im Abstand zueinander verlaufen und durch diskrete Abstandhalter 28 verbunden sind. Die untere Platte 23.2 ist mit mehreren kapillaren Öffnungen 24 ausgebildet, die sich in vertikaler Richtung zwischen den beiden horizontalen Haupt-Oberflächen der Platte 23.2 erstrecken.

Der Detektionskopf 20.2 liegt auf der Oberseite der Platte 23.2 auf.

Sofern Wasser in das Flachdach F eindringen sollte wird es sich auf der Dampfbremse D des Flachdachs F sammeln. Sobald eine bestimmte Wassermenge eindringt wird das Wasser über die Kapillaröffnungen 24 angesaugt und kann dann mit Hilfe des Detektionskopfes 20.2 angezeigt werden. Der Detektionskopf 20.2 ist als elektronisches Messzelle/Sender (RFID chip) ausgebildet, die das Signal drahtlos an eine (nicht dargestellte) Empfangseinheit gibt.

Der Raum 22.1 für den Detektionskopf 20.1 ist analog gestaltet, also zwischen zwei Platten 25.1, 25.2 die jedoch keine kapillaren Öffnungen sondern nur eine Öffnung 26 für Kabel 29 aufweisen, mit denen der Detektionskopf 20.2 an einen Funksender 30 im oberen Abschnitt 14 des Grundkörpers 10 angeschlossen ist. Der Funksender 30 überträgt die Daten an eine (nicht dargestellte) Empfangseinheit.

Wie Figur 2 zeigt liegt der untere Abschnitt 12 der Vorrichtung vollständig innerhalb einer zylindrischen Öffnung O des Flachdachs F, während der obere Abschnitt 14 das Flachdach F überragt. Der Innendurchmesser der zylindrischen Öffnung O ist minimal größer als der Außerdurchmesser des Grundkörpers 10, so dass dieser bündig in der Öffnung liegt. Zur Abdichtung ist ein vom Grundkörper 10 radial abstehender Kragen 32 auf der Dachhaut H des Flachdachs F verklebt. Mit W ist eine Wärmedämmung des Flachdachs zwischen Dachhaut H und Dampfbremse D bezeichnet, mit B eine darunter liegende Betondecke.

In Figur 3 ist eine zweite Ausführungsform der erfindungsgemäßen Detektionsvorrichtung dargestellt. Sie besteht nur aus dem untersten Abschnitt der Detektionsvorrichtung 10 gemäß Figur 1, also den Bodenplatten 23.1, 23.2 mit Abstandhaltern 28 und der Detektionsvorrichtung 20.2, die in dem zylinderförmigen Raum 22.2 angeordnet ist, der zwischen den Platten 23.1, 23.2 ausgebildet wird.

In Figur 3 ist zu erkennen, dass die Höhe (vertikal) der Detektionseinheit 10 sehr viel geringer ist als die Dicke d zwischen Dampfsperre D und Dachhaut H, wobei der nicht ausgefüllte Bereich der Öffnung O mit Mineralwolle W ausgefüllt ist. Bei dieser Ausführungsform ist es nicht notwendig, die flanschartige Abdeckung 32 vorzusehen (wie bei Figur 2). Vielmehr kann die Dachhaut H nach dem Einbau der Detektionsvorrichtung 10 durchgehend geschlossen ausgebildet werden. Der Messkopf 20.2 dient wiederum der Indikation von Feuchtigkeit, die über die Kapillaröffnungen 24 der Bodenplatte 23.2 aufsteigt, wenn sich eine entsprechende Menge Flüssigkeit auf der Dampfsperre D angesammelt hat. Der Messkopf 20.2 ist als RFID Chip gestaltet, der drahtlos arbeitet und sein Messsignal (Wasser/Kurzschluss: Ja/Nein) an eine nicht dargestellte Empfangseinheit sendet.

Mehrere dieser Vorrichtungen gemäß Figur 3 können im Abstand zueinander im Flachdach F angeordnet werden, um eine entsprechend vollständige Überwachung des Daches zu erreichen.

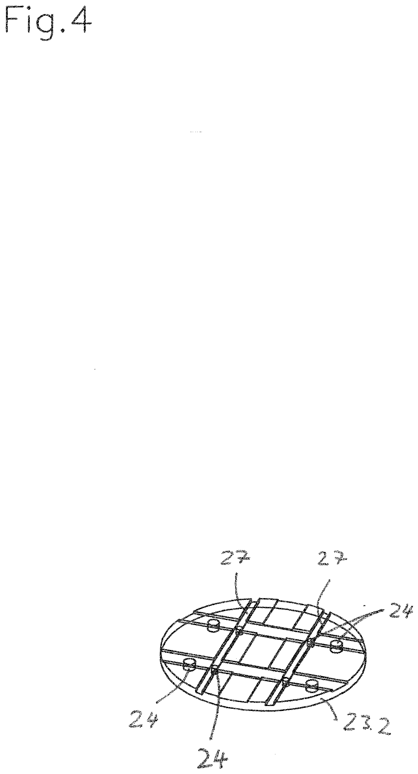

Figur 4 zeigt eine mögliche Ausführungsform der Bodenplatte 23.2 (oder 25.2) gemäß den Figuren 1 bis 3. Neben den Öffnungen 24 sind geradlinig verlaufende Rillen 27 auf der Oberseite der Bodenplatte 23.2 zu erkennen. Dabei verlaufen einige der kapillarartigen Öffnungen 24 vom Grund/Boden der Rillen 27 zur Unterseite der Bodenplatte 23.2. Die Rillen 27 dienen der Aufnahme von elektrischen Drähten, die an einer entsprechenden Stromversorgung angeschlossen sind. Erreicht etwaige Feuchtigkeit in Flachdach F über die Öffnungen 24 die elektrischen Drähte kommt es zum Kurzschluss und damit zur Anzeige von Feuchtigkeit im Dach.

Analog ist dies, wenn eine andere Messeinheit 20.2 in oder auf der Bodenplatte 23.2 angeordnet wird.

Die Bodenplatte 23.2 besteht aus elektrisch nicht leitfähigem Kunststoff.

Die Detektionsvorrichtung kann analog für Gebäudefassaden eingesetzt werden.

## Patentansprüche

1. Detektionsvorrichtung zur Prüfung von Flachdächern von Gebäuden, mit folgenden Merkmalen:
a) einem Grundkörper (10),
b) im Grundkörper (10) ist mindestens ein Raum (22.2) ausgebildet, in dem mindestens ein Detektionskopf (20.2) angeordnet ist,
c) der Raum (22.2) ist an seinem unteren Ende von einer Bodenplatte (23.2) begrenzt, die zumindest abschnittsweise flüssigkeitsdurchlässig ist,
d) mit Abstand oberhalb der Bodenplatte (23.2) ist eine korrespondierende Platte (23.1) angeordnet, die den Raum (22.2) nach oben begrenzt,
e) der Detektionskopf (20.2) umfasst mindestens eine Einrichtung zur Detektion mindestens eines der folgenden Parameter innerhalb des zu prüfenden Flachdachs: Wasser, Luftfeuchtigkeit, elektrische Leitfähigkeit, Temperatur, Gaszusammensetzung, Wasserzusammensetzung,
f) der Detektionskopf (20.2) ist im Raum (22.2) zwischen den Platten (23.1, 23.2) oder in der Bodenplatte (23.2) so angeordnet, dass er in der Funktionsposition der Detektionsvorrichtung einen Abstand zum freien unteren Ende (12e) der Detektionsvorrichtung aufweist,
**dadurch gekennzeichnet, dass**
g) die Bodenplatte (23.2) als Lochplatte ausgebildet ist, wobei die Löcher (24) in der Lochplatte so dimensioniert sind, dass Flüssigkeit, die die Lochplatte erreicht in den Raum (22.2) über der Lochplatte gesaugt wird.

2. Detektionsvorrichtung nach Anspruch 1, mit
a) einem Grundkörper (10) mit einem ersten unteren Abschnitt (12), der in einer Funktionsposition der Detektionsvorrichtung im Flachdach (F) angeordnet ist und mit einem zweiten oberen Abschnitt (14), der in dieser Funktionsposition das Flachdach (F) nach oben überragt, wobei die axiale Länge (L) zwischen den freien Enden (12e,14e) des ersten und zweiten Abschnitts (12, 14) größer ist als die Dicke (d) des zu prüfenden Flachdachs (F), wobei
b) der mindestens eine Detektionskopf (20.2) ist in einem Raum (22.2) am freien Ende (12e) des ersten Abschnitts (12) des Grundkörpers (10) ausgebildet.

3. Detektionsvorrichtung nach Anspruch 1, deren Raum (22.2), in radialer Richtung des Grundkörpers (10), zumindest partiell für Feuchtigkeit, Gas und/oder Licht durchlässig ist.

4. Detektionsvorrichtung nach Anspruch 1, bei der mindestens ein Detektionskopf (20.1, 20.2) mit radialem Abstand zur äußeren Umfangsfläche (10u) des Grundkörpers (10) angeordnet ist.

5. Detektionsvorrichtung nach Anspruch 1 mit mindestens einem Detektionskopf (20.2), der kabellos mit einer Erfassungs- und/oder Auswerteeinheit verbindbar ist.

6. Detektionsvorrichtung nach Anspruch 1 mit mindestens einem Detektionskopf (20.1), der über Kabel (28) mit einer Erfassungs- und/oder Auswerteeinheit verbindbar ist.

7. Detektionsvorrichtung nach Anspruch 1 mit mindestens einem Detektionskopf (20.2) aus der Gruppe: elektrischer Sensor, elektronischer Sensor, RFID Chip.

8. Detektionsvorrichtung nach Anspruch 1 mit mindestens einem zusätzlichen Detektionskopf zur optischen Analyse des Flachdachs.

9. Detektionsvorrichtung nach Anspruch 1 mit mindestens einem zusätzlichen Detektionskopf zur Entnahme von Proben aus dem Flachdach.

## Claims

1. Detection device for inspection of flat roofs of buildings, comprising the following features:
a) a base body (10)
b) in said base body (10) at least one space (22.2.) is formed, in which at least one detection means (20.2) is arranged,
c) said space (22.2) is limited at its lower end by a bottom plate (23.2), which is at least partially permeable to a fluid,
d) at a distance above said bottom plate (23.2.) a corresponding plate (23.1.) is arranged, which limits the space (22.2) to its upper end,
e) the detection means (20.2) comprises at least one appliance for the detection of at least one of the following parameters within the flat roof to be detected: water, air humidity, electric conductivity, temperature, gas composition, water composition,
f) the detection means (20.2) is arranged within said space (22.2) between the plates (23.1, 23.2) or within said bottom plate (23.2) in such a way that a distance to the free lowermost end (12e) of the detection device is kept when the detection device is in its operation position,
**characterized in that**
g) the bottom plate (23.2) is made as a perforated plate, wherein the holes (24) of said perforated plate are dimensioned such that a fluid, reaching the perforated plate, is sucked into the space (22.2.) above the perforated plate.

2. Detection device according to claim 1, with
a) a base body (10) comprising a first lower section (12), arranged within the flat roof when the detection device is in its operation position, and a second upper section (14), which protrudes the flat roof upwardly in this operation position, wherein the axial length (L) between the free ends (12e, 14e) of the first and second section (12, 14) is larger than the thickness (d) of the flat roof to be detected, wherein
b) the at least one detection means (20.2) is arranged within a space (22.2) at the free end (12e) of the first section (12) of the base body (10).

3. Detection device according to claim 1, which space (22.2) is at least partially permeable for humidity, gas and/or light in an radial direction of the base body (10).

4. Detection device according to claim 1, wherein the at least one detection means (20.1, 20.2) is arranged at a radial distance to the outer periphery (10u) of the base body (10).

5. Detection device according to claim 1 with at least one detection means (20.2) which can be connected in a wireless manner to a detection and evaluation unit.

6. Detection device according to claim 1 with at least one detection means (20.2) which can be connected to a detection and evaluation unit via a cable (28).

7. Detection device according to claim 1 with at least one detection means (20.2) of the group: electric sensor, electronic sensor, RFID chip.

8. Detection device according to claim 1 with at least one further detection means (20.2) to achieve an optical analysis of the flat roof.

9. Detection device according to claim 1 with at least one further detection means (20.2) to extract samples from the flat roof.

## Revendications

1. Dispositif de détection pour le contrôle des toits plats de bâtiments avec les caractéristiques suivantes :
a) un corps de base (10),
b) au moins un espace (22.2) est constitué dans le corps de base (10) dans lequel est disposée au moins une tête de détection (20.2),
c) l'espace (22.2) est limité à son extrémité inférieure par une plaque de fond (23.2), qui est au moins par section perméable aux liquides,
d) une plaque correspondante (23.1) est disposée à distance au-dessus de la plaque de fond (23.2), qui limite l'espace (22.2) vers le haut,
e) la tête de détection (20.2) comprend au moins un système pour détecter au moins un des paramètres suivants à l'intérieur du toit plat à contrôler : eau, humidité de l'air, conductivité électrique, température, composition du gaz, composition de l'eau,
f) la tête de détection (20.2) est disposée dans l'espace (22.2) entre les plaques (23.1, 23.2) ou dans la plaque de fond (23.2) de telle manière qu'elle comporte dans la position de fonctionnement du dispositif de détection, un intervalle par rapport à l'extrémité libre inférieure (12e) du dispositif de détection
**caractérisé en ce que**
g) la plaque de fond (23.2) est constituée comme une plaque perforée, les trous (24) dans la plaque perforée étant dimensionnés de telle sorte que du liquide atteignant la plaque perforée est aspiré dans l'espace (22.2) par le biais de la plaque perforée.

2. Dispositif de détection selon la revendication 1, avec
a) un corps de base (10) avec une première section inférieure (12) qui est disposée dans le toit plat (F) dans une position de fonctionnement du dispositif de détection et avec une deuxième section supérieure (14), qui dépasse le toit plat (F) vers le haut dans cette position de fonctionnement, la longueur axiale (L) entre les deux extrémités libres (12e, 14e) de la première et de la deuxième section (12, 14) étant plus grande que l'épaisseur (d) du toit plat (F) à contrôler,
b) au moins une tête de détection (20.2) est constituée dans un espace (22.2) à l'extrémité libre (12e) de la première section (12) du corps de base (10).

3. Dispositif de détection selon la revendication 1, dont l'espace (22.2) est au moins partiellement perméable à l'humidité, au gaz et/ou à la lumière dans le sens radial du corps de base (10).

4. Dispositif de détection selon la revendication 1, pour lequel au moins une tête de détection (20.1, 20.2) est disposée avec un intervalle radial par rapport à la surface périphérique extérieure (10u) du corps de base (10).

5. Dispositif de détection selon la revendication 1, avec au moins une tête de détection (20.2) qui peut être reliée sans câble à une unité de saisie et/ou d'évaluation.

6. Dispositif de détection selon la revendication 1, avec au moins une tête de détection (20.1) qui peut être reliée par un câble (28) à une unité de saisie et/ou d'évaluation.

7. Dispositif de détection selon la revendication 1, avec au moins une tête de détection (20.2) composé du groupe : capteur électrique, capteur électronique, puce d'identification par radiofréquence (IRF).

8. Dispositif de détection selon la revendication 1, avec au moins une tête de détection supplémentaire pour l'analyse optique du toit plat.

9. Dispositif de détection selon la revendication 1, avec au moins une tête de détection supplémentaire pour le prélèvement d'échantillons du toit plat.
